# EUROPEAN PATENT APPLICATION

(11) **EP 4 471 077 A1**
(43) Date of publication of application: **04.12.2024**
(21) Application number: 22922098.3
(22) Date of filing: 06.12.2022
(51) Int. Cl.: C08G 77/46, C08G 77/385

(54) **PERFLUOROPOLYETHER-ORGANOPOLYSILOXANE BLOCK COPOLYMER**

(30) Priority: 24.01.2022 JP 2022008666
(71) Applicant: SHIN-ETSU CHEMICAL CO., LTD., Tokyo 1000005 (JP)
(72) Inventor: SUZUKI Takayuki, Annaka-shi, Gunma 379-0224 (JP); GOTO Tomoyuki, Annaka-shi, Gunma 379-0224 (JP)
(74) Representative: Angerhausen, Christoph
(86) International application number: PCT/JP2022/044829
(87) International publication number: WO 2023/139947

(57) **Abstract**

Provided is a perfluoropolyether-organopolysiloxane block copolymer that has a perfluoropolyether group, that allows control of, for example, the number of siloxane units in the molecule, and that has excellent affinity with non-fluorinated organic compounds. A perfluoropolyether-organopolysiloxane block copolymer of the present invention is a perfluoropolyether-organopolysiloxane block copolymer having a perfluoropolyether block and an organopolysiloxane block. The organopolysiloxane block has, as a side chain thereof, one or more groups selected from an aralkyl group and a group having an oxyalkylene unit.

## Description

### Technical Field

The present invention relates to perfluoropolyether-organopolysiloxane block copolymers.

### Background Art

In general, perfluoropolyether group-containing compounds have properties such as chemical resistance, lubricity, releasability, and water and oil repellency because of their very low surface free energy. By utilizing these properties, perfluoropolyether group-containing compounds are industrially widely used as, for example, lubricants for magnetic recording media, oil-proofing agents for precision instruments, release agents, water- and oil-repellent antifouling agents for paper, fiber, glass, resin, and the like, cosmetics, and protective films.

However, perfluoropolyether group-containing compounds have very low compatibility and affinity with other materials because of their low surface free energy. When perfluoropolyether group-containing compounds are added to various industrial materials or other materials in order to impart the above properties, a problem occurs with, for example, dispersion stability or reactivity, which makes it unrealistic to add perfluoropolyether group-containing compounds to various industrial materials or other materials.

In view of this, a urethane acrylate composed of a reaction product of a perfluoropolyether group-containing diol and 2-isocyanatoethyl methacrylate has been proposed (PTL 1).

On the other hand, polysiloxane compounds also have properties such as water repellency, lubricity, and releasability because of their low surface free energy. In addition, polysiloxane compounds have better affinity with other materials than perfluoropolyether compounds, and their dispersion stability can also be further improved by various modifications. Thus, polysiloxane compounds can readily impart the properties of silicones when added to various industrial materials or other materials and have been used as additives for performance improvements in a wide range of fields. An example of a compound having a perfluoropolyether group and a polysiloxane chain is a perfluoropolyether-modified polysiloxane compound (PTL 2).

However, when the degree of fluorine modification of the polysiloxane compound is increased in order to enhance the properties of perfluoropolyether groups, its affinity with other industrial materials decreases considerably. Thus, a problem may occur with, for example, dispersion stability or reactivity.

In view of this, perfluoropolyether-organopolysiloxane block copolymers having both the properties of perfluoropolyethers and the properties of polysiloxanes and having excellent affinity with non-fluorinated organic compounds have been developed (PTLs 3 and 4).

In addition, a perfluoropolyether group-containing polyether-modified polysiloxane has been developed as a compound with excellent affinity with non-fluorinated organic compounds (PTL 5).

### Citation List

### Patent Literature

PTL 1: JP-A-H11-349651
PTL 2: JP-A-2006-321764
PTL 3: JP-A-2008-088412
PTL 4: JP-A-2011-021158
PTL 5: JP-A-2012-007124

### Summary of Invention

### Technical Problem

The perfluoropolyether-organopolysiloxane block copolymers disclosed in Patent documents 3 and 4 have low affinity with highly polar non-fluorinated organic compounds and may pose a problem with, for example, dispersion stability or reactivity.

The perfluoropolyether group-containing polyether-modified polysiloxane disclosed in PTL 5 has good affinity with highly polar non-fluorinated organic compounds; however, because its molecular structure is cyclic, the number of siloxane units and the number of polyether groups that can be introduced into the molecule are limited, and it is difficult to control the compatibility with non-fluorinated organic compounds and to introduce a reactive functional group such as a (meth)acryloyl group.

Accordingly, an object of the present invention is to provide a perfluoropolyether-organopolysiloxane block copolymer (which may hereinafter be simply referred to as "block copolymer") that has a perfluoropolyether group, that allows control of its molecular structure, including the number of units of each type that form the block copolymer and the degree of modification with a group to be introduced as a side chain of an organopolysiloxane block, and that has excellent affinity with non-fluorinated organic compounds.

### Solution to Problem

The inventors have conducted intensive research to solve the above problem and have found that the following perfluoropolyether-organopolysiloxane block copolymer can achieve the above object, thus having completed the present invention.

That is, the present invention is as follows.

[1] A perfluoropolyether-organopolysiloxane block copolymer having a perfluoropolyether block and an organopolysiloxane block, the organopolysiloxane block having, as a side chain thereof, one or more groups selected from an aralkyl group and a group having an oxyalkylene unit, the perfluoropolyether-organopolysiloxane block copolymer being represented by the following formula (1): 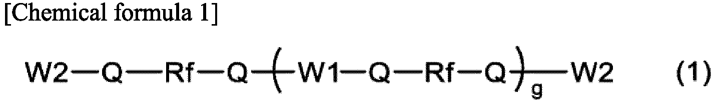
   wherein, in the formula (1), Rf is a perfluoropolyether block represented by a formula (2) as defined below, W1 is a divalent organopolysiloxane block represented by a formula (A) as defined below, each W2 is independently a monovalent organopolysiloxane block represented by a formula (B) as defined below, Q is a divalent organic group having 2 to 12 carbon atoms and g is a number of 0 or more, and
   wherein Q in the formula (1) is bonded to a carbon atom at an end of Rf, a silicon atom at an end of W1, or a silicon atom at an end of W2,
      wherein the formula (2) is expressed as:
         [Chemical formula 2]

         -C_{z}F_{2z}(OCF₂)ᵥ(OC₂F₄)_{w}(OC₃F₆)ₓ(OC₄F₈)_{y}OC₂F_{2z}- (2)

         wherein, in the formula (2), z is a number of 1 to 4, v, w, x, and y are each independently a number of 0 to 200, v + w + x + y = 3 to 200, individual repeating units may be linear or branched, and a sequence of the individual repeating units is not limited and may be random or in blocks,
      wherein the formula (A) is expressed as: 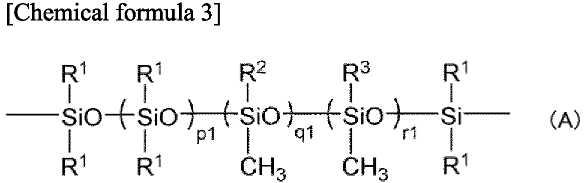
         wherein, in the formula (A), each R¹ is independently a group selected from an alkyl group having 1 to 18 carbon atoms, a phenyl group, and an organic group having a (meth)acryloyl group and having 4 to 12 carbon atoms, R² is an aralkyl group having 7 to 18 carbon atoms, R³ is a group having an oxyalkylene unit and having 6 to 300 carbon atoms, the group being represented by the following formula (3): 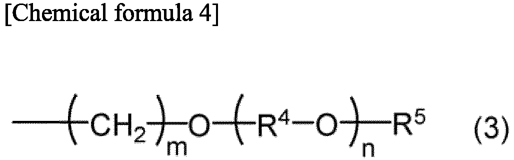 wherein, in the formula (3), R⁴ is an alkylene group having 2 to 4 carbon atoms, R⁵ is an alkyl group having 1 to 4 carbon atoms, m is a number of 3 to 4, n is a number of 1 to 60, the oxyalkylene unit in parentheses with n comprises one or more types of oxyalkylene units, and when the oxyalkylene unit comprises two or more types of oxyalkylene units, a sequence of the individual units is not limited and may be random or in blocks, and
         p1, q1, and r1 are each a number of 0 to 1,000, and a sequence of individual repeating units is not limited and may be random or in blocks and,
      the formula (B) is expressed as: 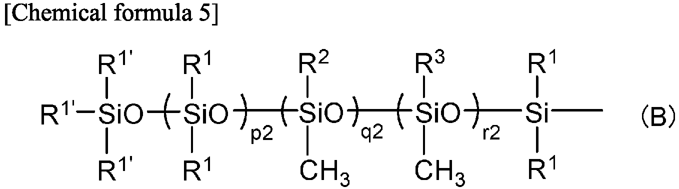 wherein, in the formula (B), each R¹ is independently a group selected from an alkyl group having 1 to 18 carbon atoms, a phenyl group, and an organic group having a (meth)acryloyl group and having 4 to 12 carbon atoms, R² is an aralkyl group having 7 to 18 carbon atoms, R³ is a group containing an oxyalkylene group and having 6 to 300 carbon atoms, the group being represented by the formula (3), each R¹' is independently a group selected from an alkyl group having 1 to 18 carbon atoms, a phenyl group, and an organic group having a (meth)acryloyl group and having 4 to 12 carbon atoms, p2, q2, and r2 are each a number of 0 to 1,000, and a sequence of individual repeating units is not limited and may be random or in blocks,
      with the proviso that q1 and r1 in the formula (A) and q2 and r2 in the formula (B) are not simultaneously 0.
[2] The perfluoropolyether-organopolysiloxane block copolymer according to [1], wherein the perfluoropolyether-organopolysiloxane block copolymer has a number average molecular weight of 3,000 to 500,000 and an organopolysiloxane block content per molecule of 50% or more.
[3] The perfluoropolyether-organopolysiloxane block copolymer according to [1] or [2], wherein, in the formulas (A) and (B), q1 + q2 > 1, and r1 + r2 = 0.
[4] The perfluoropolyether-organopolysiloxane block copolymer according to [1] or [2], wherein, in the formulas (A) and (B), q1 + q2 = 0, and r1 + r2 > 1.
[5] The perfluoropolyether-organopolysiloxane block copolymer according to any one of [1] to [4], wherein one or more of R¹ and R¹' in the formula (A) or (B) are organic groups having a (meth)acryloyl group and having 4 to 12 carbon atoms.
[6] The perfluoropolyether-organopolysiloxane block copolymer according to any one of [1] to [5], wherein the perfluoropolyether block represented by Rf is a group represented by the following formula (4):
   [Chemical formula 6]

   -CF₂(OCF₂)ᵥ(OC₂F₄)_{w}OCF₂- (4)

   wherein, in the formula (4), v and w are each a number of 0 to 200, with the provisos that v + w = 3 to 200, the (OC₂F₄) repeating unit may be linear or branched; and a sequence of individual repeating units is not limited and may be random or in blocks.

### Advantageous Effects of Invention

The block copolymer of the present invention has a perfluoropolyether block, has high siloxane content, and has an organopolysiloxane block at each end of the molecular chain thereof. Furthermore, the block copolymer of the present invention has, as a side chain of an organopolysiloxane block, one or more groups selected from an aralkyl group and a group having an oxyalkylene unit, which have excellent affinity with non-fluorinated organic compounds. Thus, despite having a perfluoropolyether block, the block copolymer of the present invention is compatible with non-fluorinated organic compounds and does not readily form a non-uniform or white turbid portion when added to, for example, a curable composition. In addition, the block copolymer of the present invention allows the number of organopolysiloxane units and the degree of modification of groups that form side chains of an organopolysiloxane block to be easily controlled and also allows a (meth)acryloyl group, which is a reactive functional group, to be easily introduced therein.

Thus, the block copolymer of the present invention is useful in applications such as surface modifiers for non-fluorinated organic resins.

### Description of Embodiments

The present invention will be described in greater detail below.

A perfluoropolyether-organopolysiloxane block copolymer of the present invention is represented by the following formula (1). A perfluoropolyether block (Rf) and an organopolysiloxane block (W1 or W2) are alternately present in the block copolymer.

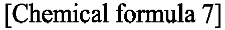

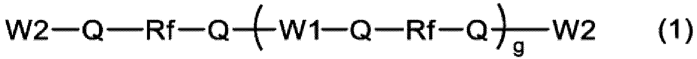

Because the organopolysiloxane block has one or more groups selected from an aralkyl group and a group having an oxyalkylene unit, which have excellent affinity with non-fluorinated organic compounds, the block copolymer of the present invention represented by the formula (1) is compatible with non-fluorinated organic compounds and does not readily form a non-uniform portion when added to, for example, a curable composition.

The block copolymer of the formula (1) preferably has an organopolysiloxane block content per molecule of 50% or more and 99% or less, more preferably 60% or more and 90% or less. When the organopolysiloxane block content is not less than the lower limit, the block copolymer has excellent compatibility with non-fluorinated organic compounds; when the organopolysiloxane block content is not more than the upper limit, the block copolymer readily exhibits the properties of perfluoropolyether groups. The organopolysiloxane block content is a value calculated by determining the molar ratio of organosiloxy units to a perfluoropolyether block Rf of known molecular weight from the integral ratio of a peak derived from organic groups on silicon atoms in W1 and W2 to a peak derived from alkylene in Q in the formula (1) in a ¹H-NMR spectrum of the block copolymer of the formula (1) and converting the molar ratio into a molecular weight ratio. Since there is typically a structural distribution of the block copolymer of the formula (1), the organopolysiloxane block content is an average value per molecule.

One or more of the organopolysiloxane blocks W1 and W2 have a siloxane unit represented by the following formula (5) or (6):

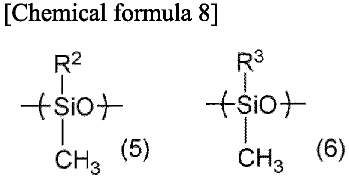

In the formula (5), R² is an aralkyl group having 7 to 18 carbon atoms, and in the formula (6), R³ is a group having an oxyalkylene unit but no hydroxy group and having 6 to 300 carbon atoms.

R² in the formula (5) is preferably an aralkyl group represented by the following formula (7): 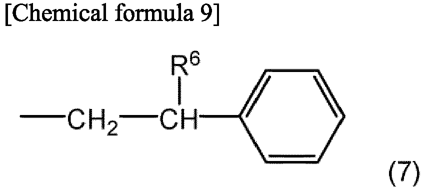 wherein, in the formula (7), R⁶ is a hydrogen atom, a methyl group, or a phenyl group, preferably a methyl group.

R³ in the formula (6) is preferably a group having an oxyalkylene unit and having 6 to 300 carbon atoms as represented by the following formula (3): 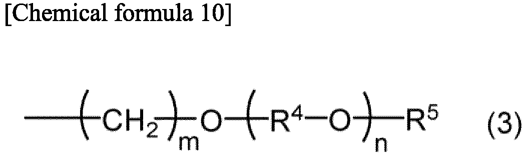 wherein, in the formula (3), R⁴ is an alkylene group having 2 to 4 carbon atoms, preferably an alkylene group having 2 or 3 carbon atoms. R⁵ is an alkyl group having 1 to 4 carbon atoms, preferably a methyl group, m is a number of 3 to 4, preferably 3. n is a number of 1 to 60, preferably a number of 2 to 12. The oxyalkylene repeating unit in parentheses with n includes one or more types of oxyalkylene units, and when the oxyalkylene unit includes two or more types of oxyalkylene units, the sequence of the individual units is not limited and may be random or in blocks.

In the formula (1), there are one or more siloxane units having one or more groups selected from an aralkyl group and a group having an oxyalkylene unit, and there are preferably two or more such siloxane units from the viewpoint of compatibility with non-fluorinated organic compounds. The siloxane units of the formula (5) or (6) in the organopolysiloxane blocks W1 and W2 may be identical to or different from each other.

In the formula (1), the organopolysiloxane block W1 is a divalent group represented by the following formula (A):

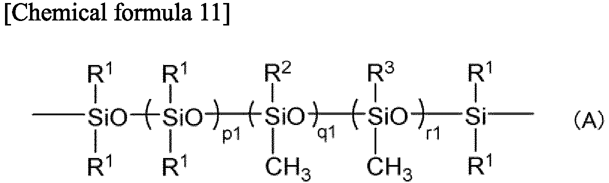

In the formula (A), each R¹ is independently a group selected from an alkyl group having 1 to 18 carbon atoms, a phenyl group, and an organic group having a (meth)acryloyl group and having 4 to 12 carbon atoms. Here, examples of alkyl groups having 1 to 18 carbon atoms include a methyl group, an ethyl group, a propyl group, a butyl group, a pentyl group, a hexyl group, an octyl group, a dodecyl group, and an octadecyl group. Examples of organic groups having a (meth)acryloyl group and having 4 to 12 carbon atoms include groups having a (meth)acryloyl group and represented by the following formula (8): 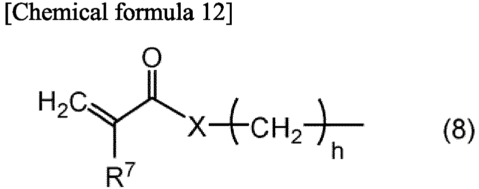 wherein, in the formula (8), R⁷ is a hydrogen atom or a methyl group. X is an oxygen atom or a group represented by -NH-, preferably an oxygen atom. h is a number of 1 to 8, preferably a number of 3 to 8.

Preferred examples of R¹ include a methyl group, a phenyl group, a 3-acryloxypropyl group, and a 3-methacryloxypropyl group, particularly preferably a methyl group.

Examples of R² and R³ in the formula (A) are as given above for R² in the formula (5) and R³ in the formula (6).

In the formula (A), p1, q1, and r1 are each a number of 0 to 1,000, preferably a number of 0 to 500, more preferably a number of 0 to 200. The sequence of the individual repeating units is not limited and may be random or in blocks.

Examples of groups represented by the formula (A) include, but not limited to, those represented by the following formulas (9) to (17):

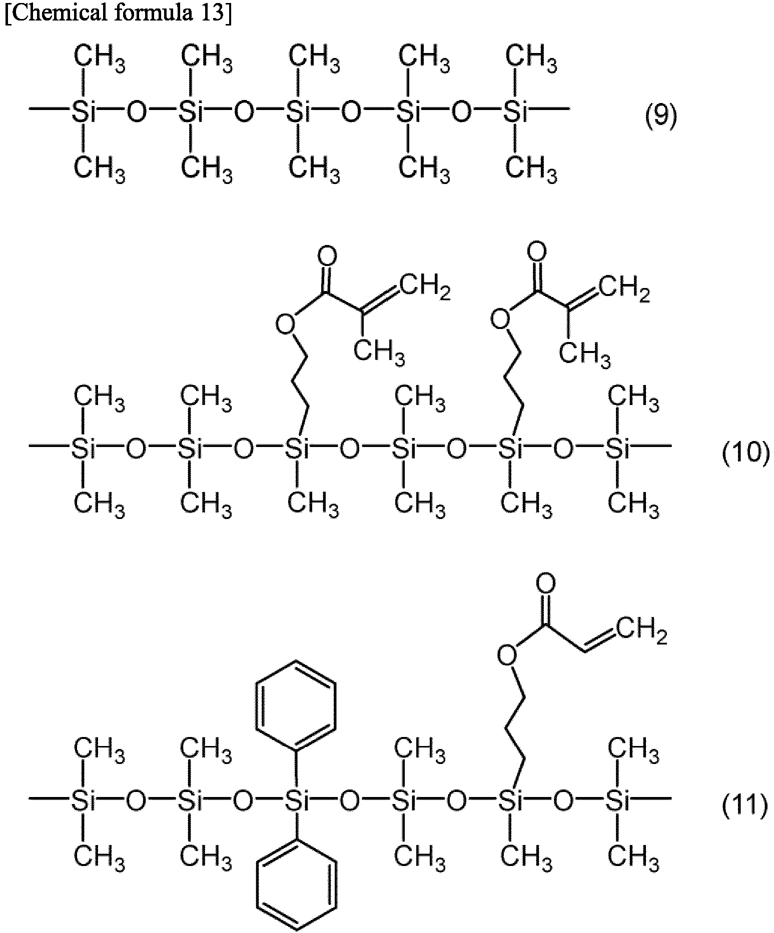

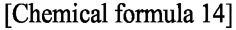

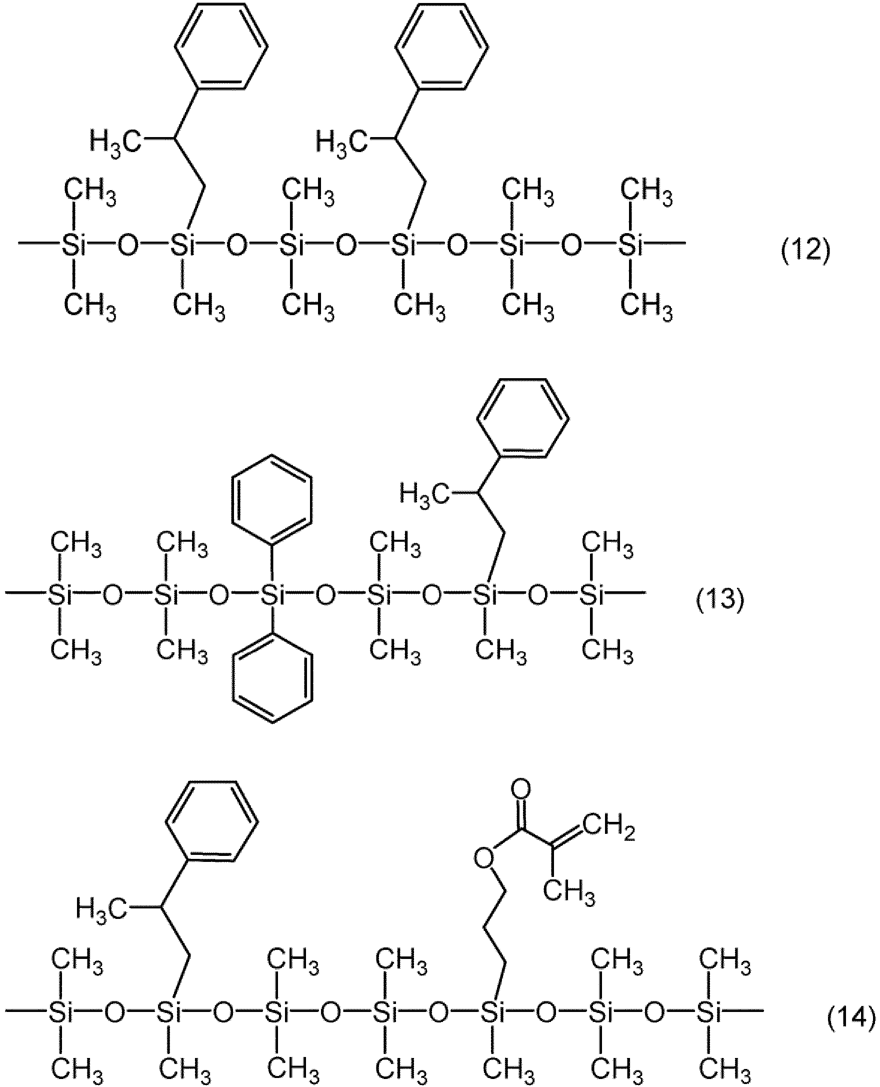

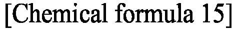

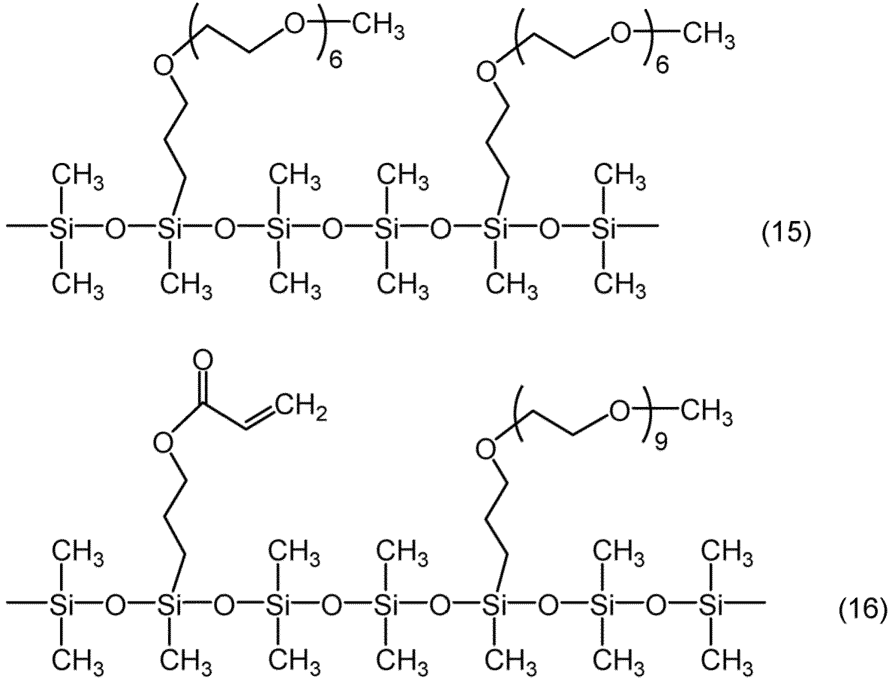

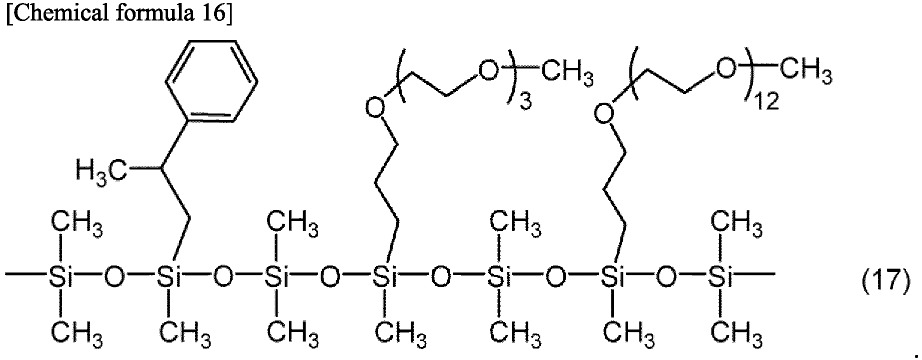

In the formula (1), the organopolysiloxane block W2 is a monovalent group represented by the following formula (B):

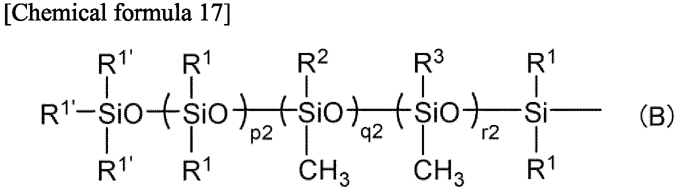

In the formula (B), each R¹ is independently a group selected from an alkyl group having 1 to 18 carbon atoms, a phenyl group, and an organic group having a (meth)acryloyl group and having 4 to 12 carbon atoms. R² is an aralkyl group having 7 to 18 carbon atoms. R³ is a group containing an oxyalkylene group and having 6 to 300 carbon atoms as represented by the formula (3). Preferred forms of R¹, R², and R³ are as given for the formula (A). Each R¹' is independently a group selected from an alkyl group having 1 to 18 carbon atoms, a phenyl group, and an organic group having a (meth)acryloyl group and having 4 to 12 carbon atoms, preferably a methyl group, an ethyl group, a propyl group, a butyl group, a hexyl group, an octyl group, a dodecyl group, an octadecyl group, an acryloxymethyl group, a 3-acryloxypropyl group, a methacryloxymethyl group, or a 3-methacryloxypropyl group, more preferably a butyl group, a hexyl group, an octyl group, or a dodecyl group.

In the formula (B), p2, q2, and r2 are each a number of 0 to 1,000, preferably a number of 0 to 500, more preferably a number of 0 to 200. The sequence of the individual repeating units is not limited and may be random or in blocks. However, q1 and r1 in the formula (A) and q2 and r2 in the formula (B) are not simultaneously 0.

Examples of groups represented by the formula (B) include, but not limited to, those represented by the following formulas (18) to (26):

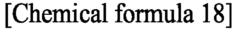

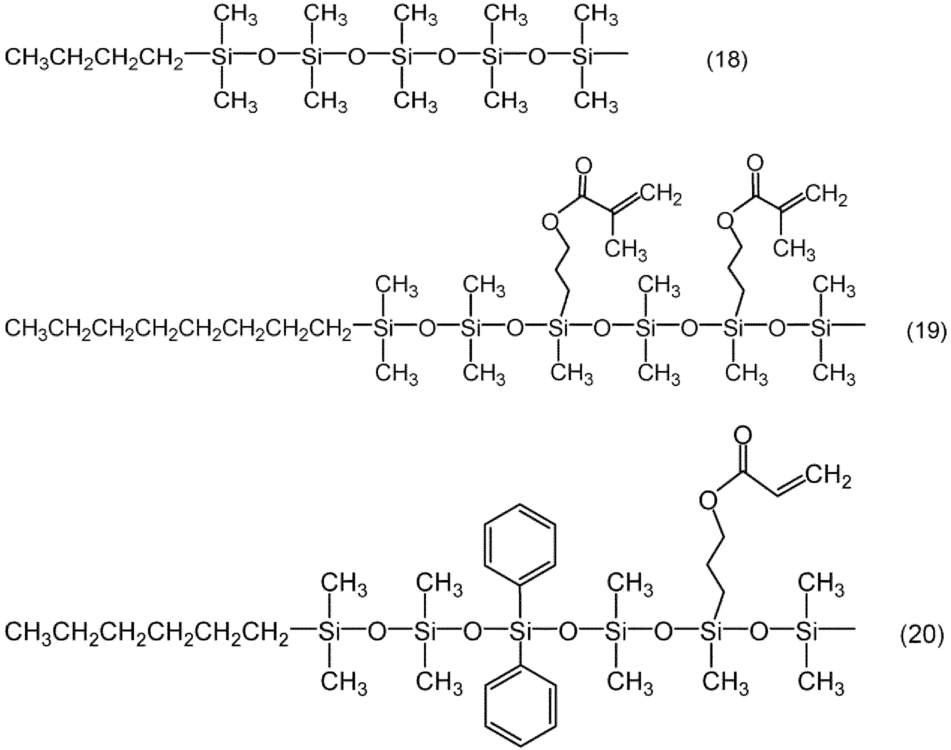

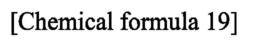

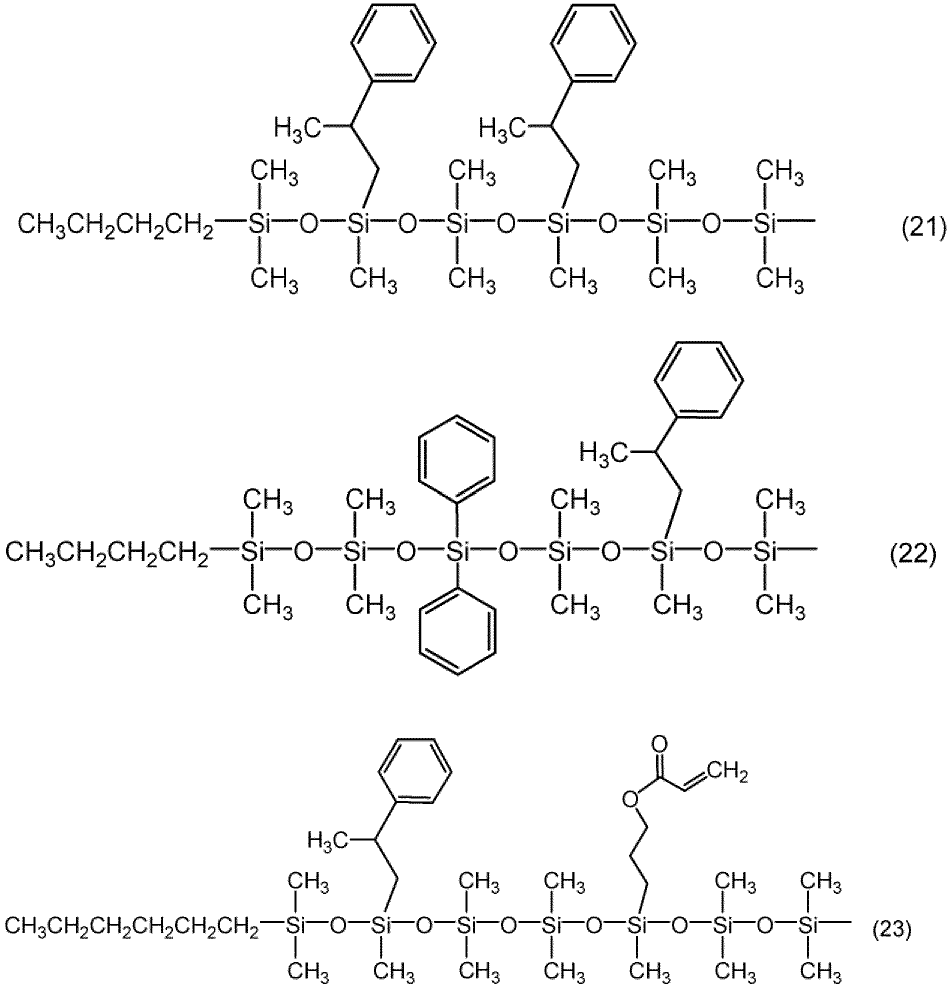

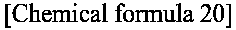

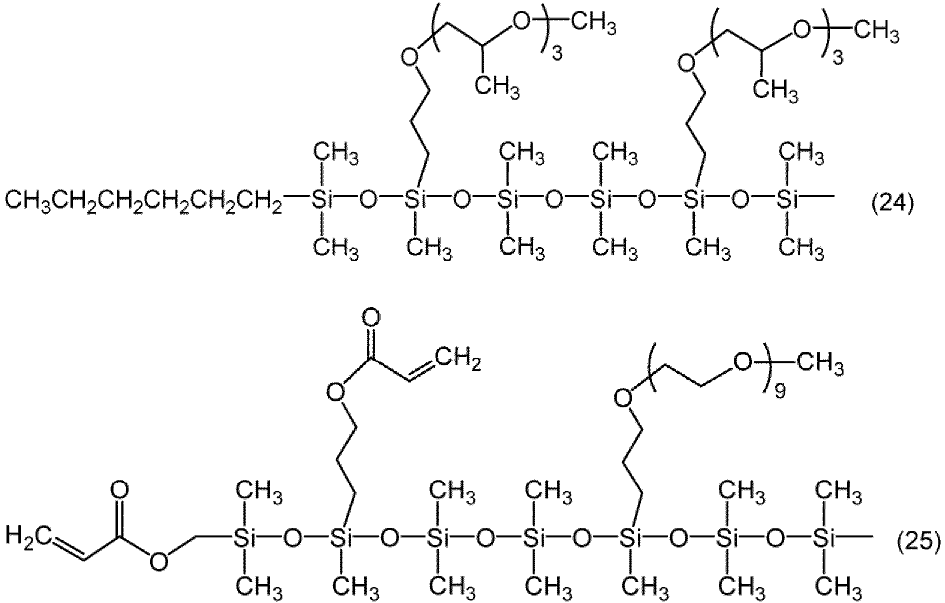

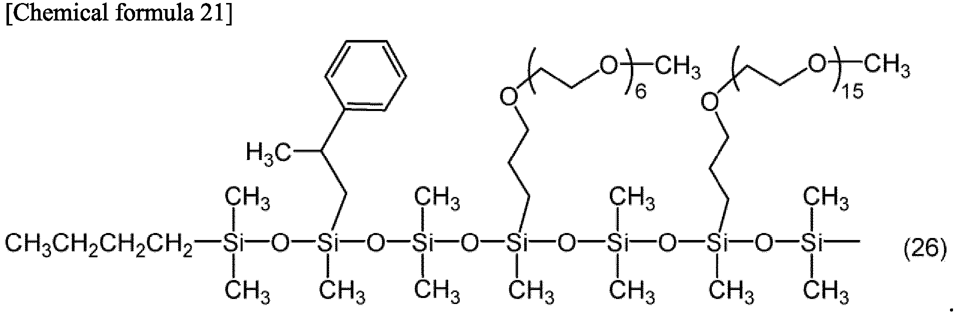

The perfluoropolyether block Rf in the formula (1) is represented by the following formula (2):
[Chemical formula 22]

- C_{z}F_{2z}(OCF₂)ᵥ(OC₂F₄)_{w}(OC₃F₆)ₓ(OC₄F₈)_{y}OC_{z}F_{2z}- (2)

In the formula (2), z is a number of 1 to 4, v, w, x, and y are each independently a number of 0 to 200, preferably a number of 0 to 50, with the provisos that v + w + x + y = 3 to 200, preferably 10 to 50, the individual repeating units may be linear or branched, and the sequence of the individual repeating units is not limited and may be random or in blocks.

Examples of the individual repeating units in the perfluoropolyether block Rf represented by the formula (2) include the following repeating units:

[Chemical formula 23] -CF₂O- -CF₂CF₂O- -CF₂CF₂CF₂O- -CF(CF₃)CF₂O- -CF₂CF₂CF₂CF₂O- -C(CF₃)₂O-

In particular, a perfluoropolyether block of the formula (2) wherein z = 1 and x and y are 0, that is, a perfluoropolyether block represented by the following formula (4):
[Chemical formula 24]

-CF₂(OCF₂)ᵥ(OC₂F₄)_{w}OCF₂- (4)

is preferred because of its excellent compatibility with non-fluorinated organic compounds.

In the formula (4), v and w are each a number of 0 to 200, preferably a number of 0 to 50, with the provisos that v + w = 3 to 200, preferably 10 to 50; the (OC₂F₄) repeating unit may be linear or branched, and the sequence of the individual repeating units is not limited and may be random or in blocks.

There is typically a structural distribution of the perfluoropolyether blocks represented by the above formulas, and v, w, x, and y are each an average value per molecule.

In the formula (1), Q is a divalent organic group having 2 to 12 carbon atoms, preferably 3 to 6 carbon atoms. In addition, Q in the formula (1) is bonded to a carbon atom at an end of Rf, a silicon atom at an end of W1, or a silicon atom at an end of W2. Q may contain an oxygen atom or a nitrogen atom. Specifically, Q may contain, for example, an ether bond, an ester bond, an amide bond, or a secondary amino group. Specific examples of Q include the following groups: 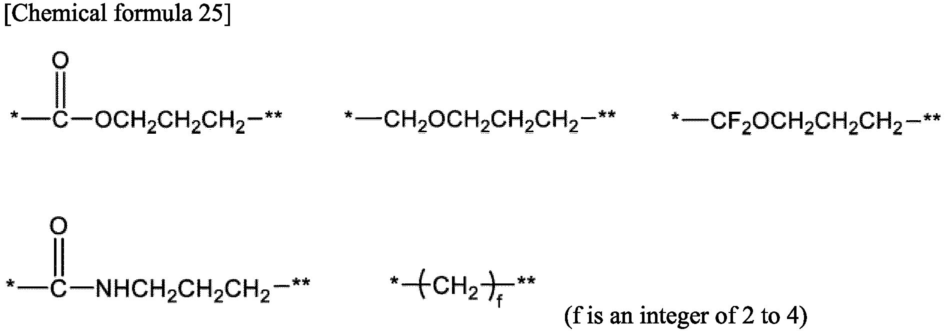 wherein * represents a free radical bonded to Rf, and ** represents a free radical bonded to W1 or W2.

Of the specific examples of Q, *-CH₂OCH₂CH₂CH₂-** is preferred in that it allows the organopolysiloxane block and the perfluoropolyether block to be easily linked together.

The block copolymer of the formula (1) preferably has a number average molecular weight of 3,000 to 500,000. When the number average molecular weight falls within this range, the block copolymer tends to exhibit excellent solubility in non-fluorinated organic compounds and also tends to be easy to handle. In the present specification, the number average molecular weight is a polystyrene-equivalent value determined by gel permeation chromatography (GPC) measurement under the following conditions (the same applies hereinafter).

### [Measurement Conditions]

Developing solvent: toluene
Flow rate: 0.6 mL/min
Detector: differential refractive index detector (RI)
Column: TSK Guardcolumn Super H-H
   TSKgel Super H5000 (6.0 mm I.D. × 15 cm × 1)
   TSKgel Super H4000 (6.0 mm I.D. × 15 cm × 1)
   TSKgel Super H3000 (6.0 mm I.D. × 15 cm × 1)
   TSKgel Super H2000 (6.0 mm I.D. × 15 cm × 1)
   (all manufactured by Tosoh Corporation)
Column temperature: 40°C
Sample injection volume: 50 µL (toluene solution with concentration of 0.3% by mass)

In the formula (1), g is a number of 0 or more, preferably a number satisfying the condition that the block copolymer of the formula (1) has a number average molecular weight of 3,000 to 500,000. Specifically, g is preferably a number of 0 to 50, more preferably a number of 0 to 10.

### [Method for Manufacturing Perfluoropolyether-Organopolysiloxane Block Copolymer]

The block copolymer of the present invention can be manufactured by the method described below.

The block copolymer represented by the formula (1) can be obtained by performing a hydrosilylation reaction of
a component (a): an organohydrogenpolysiloxane having a perfluoropolyether block and represented by the following formula (27)
   and
a component (b): one or more selected from an aralkyl compound having a carbon-carbon double bond at an end thereof and having 7 to 18 carbon atoms and a compound having an oxyalkylene unit, having a carbon-carbon double bond at an end thereof, and having 6 to 300 carbon atoms as represented by the following formula (28)
   in the presence of
a component (c): a hydrosilylation reaction catalyst. 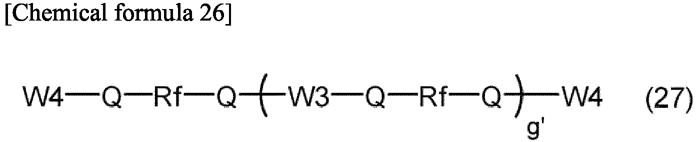 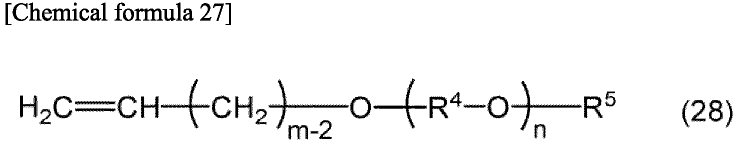
(wherein, in the formula (28), R⁴, R⁵, m, and n are each as defined in the formula (3), the sequence of the repeating units in parentheses with n is not limited and may be random or in blocks, and the oxyalkylene unit includes one or more types of oxyalkylene units.)

In the formula (27), Rf is a perfluoropolyether block represented by the formula (2), and g' is a number of 0 or more.

In the formula (27), each organopolysiloxane block W3 is independently a divalent group represented by the following formula (A'): 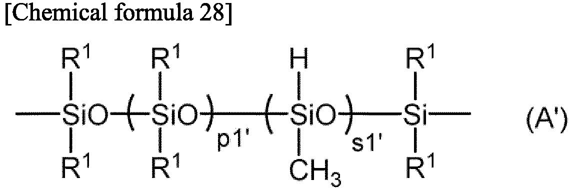 wherein, in the formula (A'), R¹ is as defined in the formula (A), p1' and s1' are each a number of 0 to 1,000, preferably a number of 0 to 200. The sequence of the individual repeating units is not limited and may be random or in blocks.

In the formula (27), each organopolysiloxane block W4 is independently a monovalent group represented by the following formula (B'): 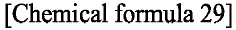 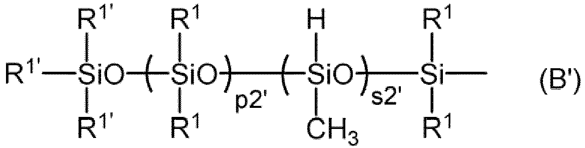 wherein, in the formula (B'), R¹ and R¹' are as defined in the formula (B). p2' and s2' are each a number of 0 to 1,000, preferably a number of 0 to 200. The sequence of the individual repeating units is not limited and may be random or in blocks.

However, the number of hydrogensiloxane units s1' in the formula (A') and the number of hydrogensiloxane units s2' in the formula (B') are not simultaneously 0.

In the formula (27), Q is a divalent organic group having 2 to 12 carbon atoms. In addition, Q is bonded to a carbon atom at an end of Rf, a silicon atom at an end of W3, or a silicon atom at an end of W4.

The component (b), namely, the aralkyl compound having a carbon-carbon double bond at an end thereof and having 7 to 18 carbon atoms, is preferably a compound represented by the following formula (29): 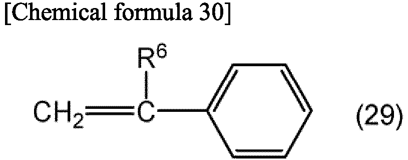 wherein R⁶ is as defined in the formula (7).

The component (c), namely, the hydrosilylation reaction catalyst, is, for example, a platinum, palladium, rhodium, or ruthenium catalyst, preferably a platinum catalyst. Examples of platinum catalysts include chloroplatinic acid, solutions of chloroplatinic acid in alcohols or aldehydes, complexes of chloroplatinic acid with various olefins or vinylsiloxanes, and complexes of platinum with various olefins or vinylsiloxanes.

The component (c), namely, the hydrosilylation reaction catalyst, may be present in a so-called catalytic amount, preferably 0.1 to 200 ppm on a metal atom weight basis based on the total weight of the components (a) and (b).

In the method for manufacturing the organopolysiloxane of the formula (1) by the hydrosilylation reaction of the components (a) and (b), a component (d), namely, an organic solvent, may optionally be added to perform the hydrosilylation reaction. Although this reaction can be performed without a solvent, the addition of an organic solvent facilitates dissolution of the components (a) and (b) in each other so that the hydrosilylation reaction may proceed efficiently.

Examples of the component (d), namely, the organic solvent, include aromatic hydrocarbons such as toluene and xylene; alcohols such as 1-propanol, 2-propanol, and 1-butanol; and fluorinated aromatic hydrocarbons such as (trifluoromethyl)benzene and 1,3-bis(trifluoromethyl)benzene. Toluene is preferred because of its good compatibility with the components (a) and (b).

Although there are no particular restrictions on the amount of the component (d), namely, the organic solvent, used as long as it is an amount sufficient to allow the components (a) and (b) to dissolve in each other, the amount of the component (d) used is preferably 10% to 300% by mass based on the total mass of the components (a) and (b).

The component (a), namely, the organohydrogenpolysiloxane having the perfluoropolyether block represented by the formula (27), can be manufactured, for example, by the following method.

Specifically, a component (e), namely, a perfluoropolyether-organopolysiloxane block copolymer represented by the following formula (30), a component (f), namely, an organohydrogenpolysiloxane, a component (g), namely, an acid catalyst, and optionally a component (h), namely, one or more selected from polysiloxanes represented by the following formulas (31) and (32), are mixed together to perform a siloxane exchange reaction between the components (e), (f), and (h).

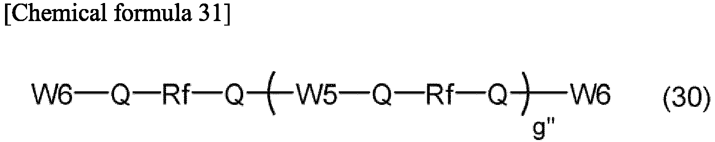

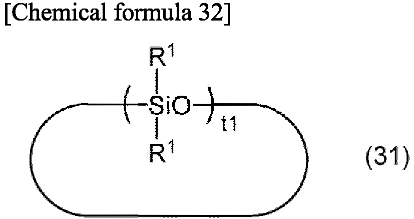

In the formula (31), R¹ is as defined in the formula (A'), and t1 is a number of 3 to 10, preferably a number of 3 to 8.

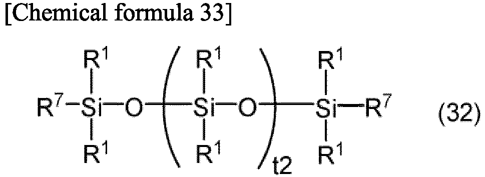

(In the formula (32), R¹ is as defined in the formula (B'), each R⁷ is independently a hydroxy group, an alkyl group having 1 to 4 carbon atoms, or an alkoxy group having 1 to 4 carbon atoms, preferably a hydroxy group, a methyl group, or a methoxy group, and t2 is a number of 0 to 5,000, preferably a number of 2 to 1,000.)

In the formula (30), Rf is as defined in the formula (27), and g" is a number of 0 or more.

In the formula (30), each organopolysiloxane block W5 is independently a divalent group represented by the following formula (A"): 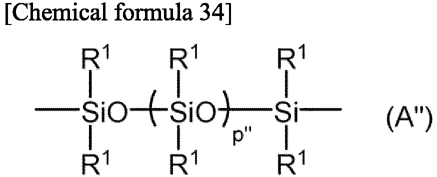 wherein, in the formula (A"), R¹ is as defined in the formula (A'), and p" is a number of 0 to 1,000, preferably a number of 0 to 500, more preferably a number of 0 to 200.

In the formula (30), each organopolysiloxane block W6 is a monovalent group represented by the following formula (B"): 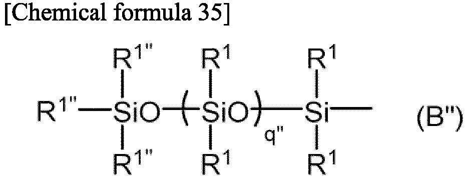 wherein, in the formula (B"), R¹ is as defined in the formula (B'). Each R¹" is independently an alkyl group having 1 to 18 carbon atoms or a phenyl group, preferably a methyl group, an ethyl group, a propyl group, a butyl group, a hexyl group, an octyl group, a dodecyl group, or an octadecyl group, more preferably a butyl group, a hexyl group, an octyl group, or a dodecyl group, q" is a number of 0 to 1,000, preferably a number of 0 to 500, more preferably a number of 0 to 200.

In the formula (30), Q is a divalent organic group having 2 to 12 carbon atoms. In addition, Q is bonded to a carbon atom at an end of Rf, a silicon atom at an end of W5, or a silicon atom at an end of W6.

Although the component (f), namely, the organohydrogenpolysiloxane, may be linear, branched, or cyclic, examples thereof include the following siloxanes:

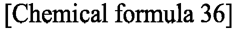

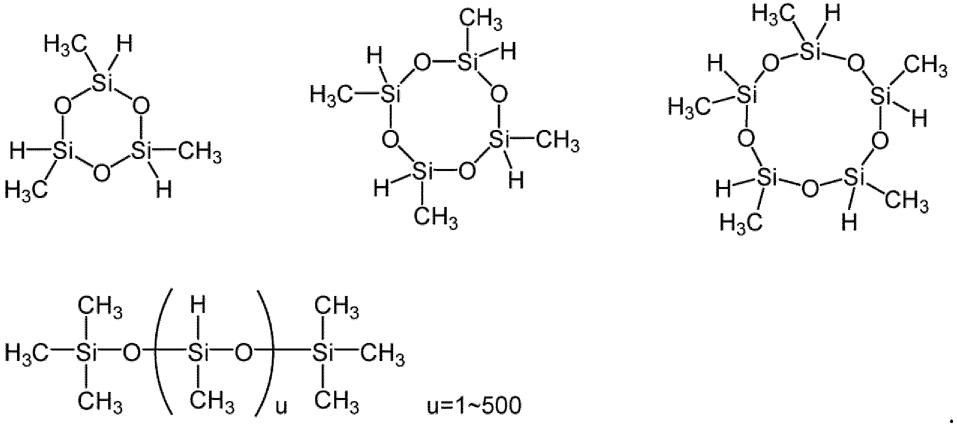

Although there are no particular restrictions on the component (g), namely, the acid catalyst, as long as it can hydrolyze the siloxane bonds of the components (e) and (f), sulfuric acid, methanesulfonic acid, trifluoromethanesulfonic acid, and the like are preferred.

Examples of the component (h), namely, the polysiloxanes represented by the formulas (31) and (32), include the following siloxanes:

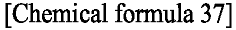

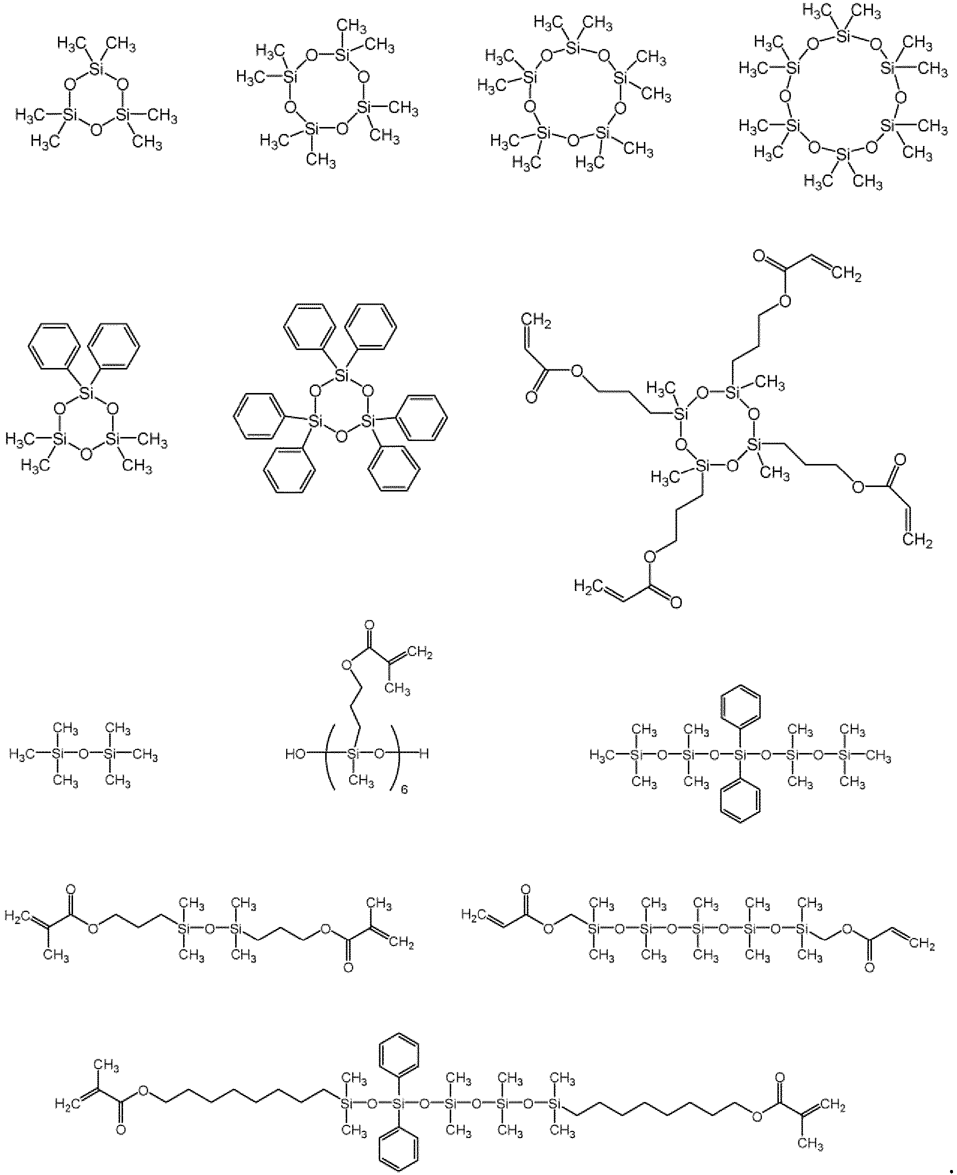

In the method for manufacturing the organohydrogenpolysiloxane of the formula (27) by the siloxane exchange reaction, a component (i), namely, an organic solvent, may optionally be added to perform the siloxane exchange reaction. Although this reaction can be performed without a solvent, the addition of an organic solvent facilitates dissolution of the component (e), namely, the perfluoropolyether-organopolysiloxane block copolymer, and the components (f) and (h), namely, the polysiloxanes, in each other so that the siloxane exchange reaction can proceed efficiently.

Although there are no particular restrictions on the amount of the component (i), namely, the organic solvent, used as long as it is an amount sufficient to allow the components (e), (f), and (h) to dissolve in each other, the amount of the component (i) used is preferably 10% to 300% by mass based on the total mass of the components (e), (f), and (h).

### Examples

The present invention will be specifically described with reference to the following Working Examples and Comparative Examples, although the present invention is not limited to the Working Examples below. In the examples below, the number average molecular weight is a polystyrene-equivalent value determined by GPC measurement under the measurement conditions described above. In addition, in the examples below, the number of repeating units g is a value calculated from an integral value M derived from Si of the Si(R¹')₃-O- structure based on the formula (1) and an integral value M' derived from Si of the -Q-Si(R¹)₂-O-structure based on the formula (1) in a ²⁹Si-NMR spectrum, and g = (M'/M) - 1.

### [Working Example 1] Synthesis of Block Copolymer (1-1)

Into a reaction container were placed 3.0 g of an organohydrogenpolysiloxane having a perfluoropolyether block and represented by the following formula (27-1), 0.52 g of isopropenylbenzene, and 3.5 g of toluene as a solvent, followed by stirring at 80°C for 5 minutes. Then, 0.01 g of a solution of a platinum-vinylsiloxane complex in toluene was added, followed by stirring at 110°C for 4 hours. Then, excess isopropenylbenzene and the solvent, namely, toluene, were distilled off under reduced pressure to obtain 3.2 g of a liquid product. 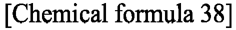 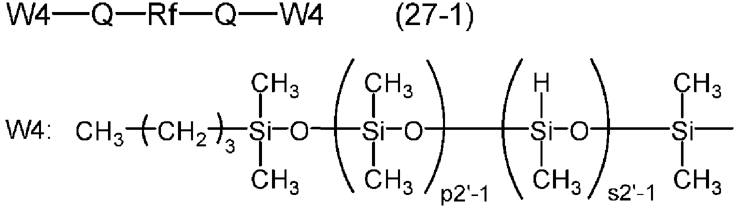 (In the formula (27-1) the number of dimethylsiloxane units is 60, the number of methylhydrogensiloxane units is 8, and p2'-1 and s2'-1 in the formula W4 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

(In the formula, Rf is bonded to the methylene group side of Q in the formula (27-1) (the same applies hereinafter).)

The results of NMR spectrum measurements for the resulting product were as follows.

**[Table 1]**

| Chemical shift in ¹H-NMR spectrum (measurement device: AVANCE 400 manufactured by Bruker, solvent: CDCl₃) | | |
|---|---|---|
| Shift (ppm; with respect to TMS) | | Integral ratio (H) |
| -0.55 to 0.30 | -Si-CH₃ | 408 |
| 0.43 to 0.62 | -Si-CH₂-(CH₂)₂-CH₃ | 8 |
| | -Si-CH₂-CH₂-CH₂-O-CH₂-Rf- | |
| 0.80 to 1.03 | -Si-CH₂-(CH₂)₂-CH₃ | 22 |
| | -Si-CH₂-CH(CH₃)-C₆H₅ | |
| 1.17 to 1.40 | -Si-CH₂-(CH₂)₂-CH₃ | 32 |
| | -Si-CH₂-CH(CH₃)-C₆H₅ | |
| 1.52 to 1.72 | -Si-CH₂-CH₂-CH₂-O-CH₂-Rf- | 4 |
| 2.95 | -Si-CH₂-CH(CH₃)-C₆H₅ | 8 |
| 3.42 to 3.62 | -Si-CH₂-CH₂-CH₂-O-CH₂-Rf- | 4 |
| 3.64 to 3.84 | -Si-CH₂-CH₂-CH₂-O-CH₂-Rf- | 4 |
| 7.07 to 7.33 | -Si-CH₂-CH(CH₃)-C₆H₅ | 40 |

**[Table 2]**

| Chemical shift in ¹⁹F-NMR spectrum | | |
|---|---|---|
| Shift (ppm; with respect to F11) | | Integral ratio (F) |
| -93.0 to 88.3 | -O-CF₂-CF₂-O- | 44 |
| -79.9 | -CH₂-CF₂-O- | 2 |
| -77.9 | -CH₂-CF₂-O- | 2 |
| -57.0 to -51.1 | -O-CF₂-O- | 16 |

**[Table 3]**

| Chemical shift in ²⁹Si-NMR spectrum | | |
|---|---|---|
| Shift (ppm; with respect to TMS) | | Integral ratio (Si) |
| -24.3 to -20.6 | -O-Si(CH₃)₂-O- | 68 |
| | -O-Si(CH₃)(CH₂CH(CH₃)C₆H₅)-O- | |
| 7.4 | CH₃(CH₂)₃-Si(CH₃)₂-O- | 2 |
| 7.5 | -O-Si(CH₃)₂-CH₂CH₂CH₂-O-CH₂-Rf- | 2 |

The above results showed that the product was a block copolymer having a structure represented by the following formula (1-1) and having an organopolysiloxane block content per molecule of 77%. In addition, the polystyrene-equivalent number average molecular weight of the block copolymer as measured by GPC was 6,950. 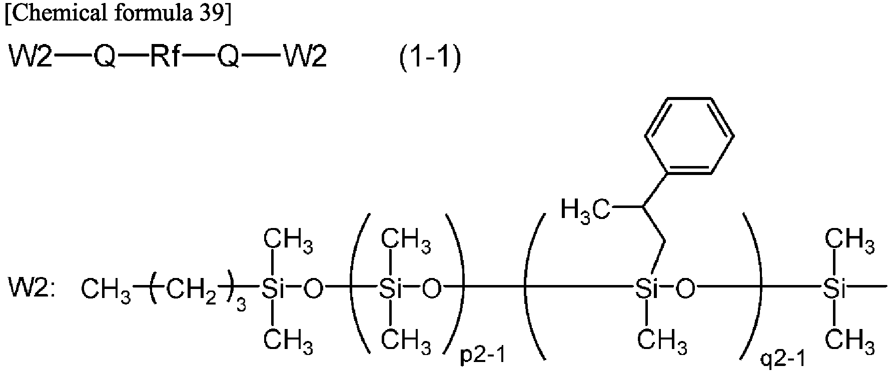 (In the formula (1-1), the number of dimethylsiloxane units is 60, the number of siloxane units having an aralkyl group is 8, and p2-1 and q2-1 in the formula W2 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

### [Working Example 2] Synthesis of Block Copolymer (1-2)

Into a reaction container were placed 3.5 g of an organohydrogenpolysiloxane having a perfluoropolyether block and represented by the following formula (27-2), 1.4 g of a polyether having a carbon-carbon double bond at an end thereof and represented by the following formula (28-2), and 4.9 g of toluene as a solvent, followed by stirring at 80°C for 5 minutes. Then, 0.02 g of a solution of a platinum-vinylsiloxane complex in toluene was added, followed by stirring at 100°C for 2 hours. Then, the solvent, namely, toluene, was distilled off under reduced pressure to obtain 4.7 g of a liquid product. 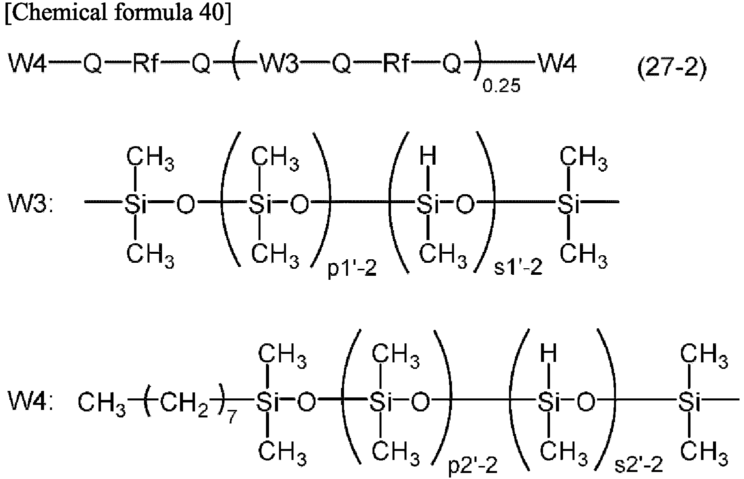 (In the formula, the number of dimethylsiloxane units is 18, the number of methylhydrogensiloxane units is 5, and p1'-2, s1'-2, p2'-2, and s2'-2 in the formulas W3 and W4 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

H₂C=CH-CH₂-O-(-C₂H₄-O-)₆-CH₃ (28-2)

6

The results of NMR spectrum measurements for the resulting product were as follows.

**[Table 4]**

| Chemical shift in ¹H-NMR spectrum (measurement device: AVANCE 400 manufactured by Bruker, solvent: CDCl₃) | | |
|---|---|---|
| Shift (ppm; with respect to TMS) | | Integral ratio (H) |
| -0.39 to 0.30 | -Si-CH₃ | 150 |
| 0.38 to 0.63 | -Si-CH₂-(CH₂)₆-CH₃ | 19 |
| | -Si-CH₂-CH₂-CH₂-O-CH₂-Rf- | |
| | -Si-CH₂-CH₂-CH₂-O-(C₂H₄-O-)₆CH₃ | |
| 0.88 | -Si-CH₂-(CH₂)₆-CH₃ | 6 |
| 1.17 to 1.40 | -Si-CH₂-(CH₂)₆-CH₃ | 24 |
| 1.47 to 1.70 | -Si-CH₂-CH₂-CH₂-O-CH₂-Rf- | 15 |
| | -Si-CH₂-CH₂-CH₂-O-(C₂H₄-O-)₆CH₃ | |
| 3.36 | -Si-CH₂-CH₂-CH₂-O-(C₂H₄-O-)₆CH₃ | 15 |
| 3.37 to 3.84 | -Si-CH₂-CH₂-CH₂-O-CH₂-Rf- | 140 |
| | -Si-CH₂-CH₂-CH₂-O-(C₂H₄-O-)₆CH₃ | |

**[Table 5]**

| Chemical shift in ¹⁹F-NMR spectrum | | |
|---|---|---|
| Shift (ppm; with respect to F11) | | Integral ratio (F) |
| -93.0 to 88.3 | -O-CF₂-CF₂-O- | 44 |
| -79.9 | -CH₂-CF₂-O- | 2 |
| -77.9 | -CH₂-CF₂-O- | 2 |
| -57.0 to -51.1 | -O-CF₂-O- | 16 |

**[Table 6]**

| Chemical shift in ²⁹Si-NMR spectrum | | |
|---|---|---|
| Shift (ppm; with respect to TMS) | | Integral ratio (Si) |
| -23.9 to -20.9 | -O-Si(CH₃)₂-O- | 23 |
| | -O-Si(CH₃)(C₃H₆O(C₂H₄O)₆CH₃)-O- | |
| 7.4 | CH₃(CH₂)₇-Si(CH₃)₂-O- | 2 |
| 7.5 | -O-Si(CH₃)₂-CH₂CH₂CH₂-O-CH₂-Rf- | 2.5 |

The above results showed that the product was a block copolymer having a structure represented by the following formula (1-2) and having an organopolysiloxane block content per molecule of 50%. In addition, the polystyrene-equivalent number average molecular weight of the block copolymer as measured by GPC was 4,070. 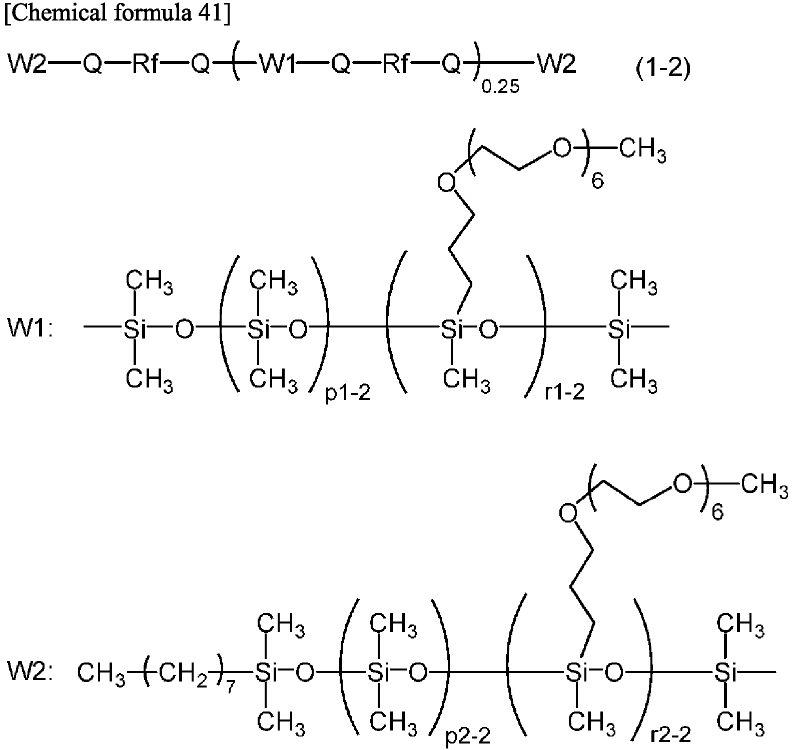 (In the formula (1-2), the number of dimethylsiloxane units is 18, the number of siloxane units having a polyether group is 5, and p1-2, r1-2, p2-2, and r2-2 in the formulas W1 and W2 are numbers satisfying these.)

Rf:

-CF₂(OCF₂)ᵥ(OC₂F₄)_{w}OCF₂-

(In the formula, v/w is 0.73, and v + w is 19.)

Q:

-CH₂OCH₂CH₂CH₂-

### [Working Example 3] Synthesis of Block Copolymer (1-3)

Into a reaction container were placed 3.3 g of an organohydrogenpolysiloxane having a perfluoropolyether block and represented by the following formula (27-3), 1.2 g of a polyether having a carbon-carbon double bond at an end thereof and represented by the following formula (28-3), and 6.8 g of toluene as a solvent, followed by stirring at 80°C for 5 minutes. Then, 0.02 g of a solution of a platinum-vinylsiloxane complex in toluene was added, followed by stirring at 80°C for 5 hours. Then, the solvent, namely, toluene, was distilled off under reduced pressure to obtain 4.2 g of a liquid product. 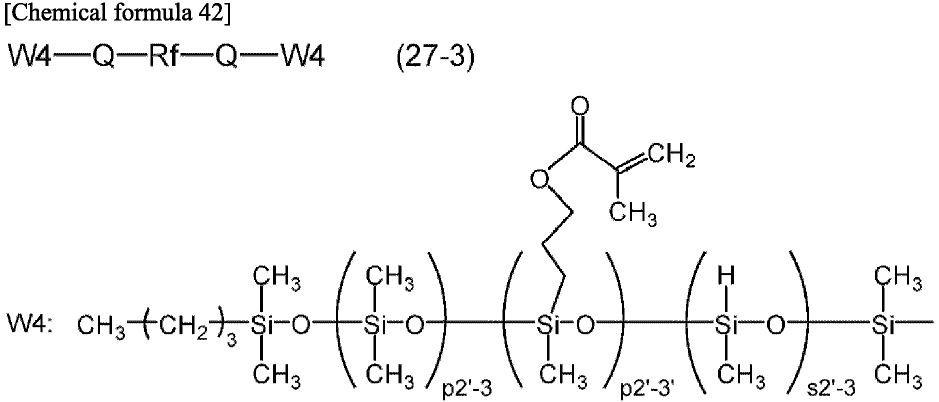 (In the formula (27-3), the number of dimethylsiloxane units is 60, the number of siloxane units having a methacryloyl group is 4, the number of methylhydrogensiloxane units is 8, and p2'-3, p2'-3', and s2'-3 in the formula W4 are numbers satisfying these.)
Rf:

-CF₂(OCF₂)ᵥ(OC₂F₄)_{w}OCF₂-

(In the formula, v/w is 0.73, and v + w is 19.) Q: -CH₂OCH₂CH₂CH₂-

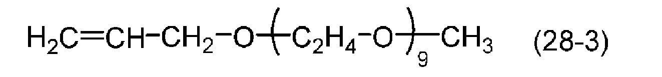

The results of NMR spectrum measurements for the resulting product were as follows.

**[Table 7]**

| Chemical shift in ¹H-NMR spectrum (measurement device: AVANCE 400 manufactured by Bruker, solvent: CDCl₃) | | |
|---|---|---|
| Shift (ppm; with respect to TMS) | | Integral ratio (H) |
| -0.39 to 0.30 | -Si-CH₃ | 420 |
| 0.38 to 0.63 | -Si-CH₂-(CH₂)₂-CH₃ | 32 |
| | -Si-CH₂-CH₂-CH₂-O-CH₂-Rf- | |
| | -Si-CH₂-CH₂-CH₂-O-CO-C(CH₃)=CH₂ | |
| | -Si-CH₂-CH₂-CH₂-O-(C₂H₄-O-)₉CH₃ | |
| 0.88 | -Si-CH₂-(CH₂)₂-CH₃ | 6 |
| 1.17 to 1.40 | -Si-CH₂-(CH₂)₂-CH₃ | 8 |
| 1.47 to 1.80 | -Si-CH₂-CH₂-CH₂-O-CH₂-Rf- | 28 |
| | -Si-CH₂-CH₂-CH₂-O-CO-C(CH₃)=CH₂ | |
| | -Si-CH₂-CH₂-CH₂-O-(C₂H₄-O-)₉CH₃ | |
| 1.94 | -Si-CH₂-CH₂-CH₂-O-CO-C(CH₃)=CH₂ | 12 |
| 3.36 | -Si-CH₂-CH₂-CH₂-O-(C₂H₄-O-)₉CH₃ | 24 |
| 3.37 to 3.84 | -Si-CH₂-CH₂-CH₂-O-CH₂-Rf- | 312 |
| | -Si-CH₂-CH₂-CH₂-O-(C₂H₄-O-)₉CH₃ | |
| 4.10 | -Si-CH₂-CH₂-CH₂-O-CO-C(CH₃)=CH₂ | 8 |
| 5.54 | -Si-CH₂-CH₂-CH₂-O-CO-C(CH₃)=CH₂ | 4 |
| 6.10 | -Si-CH₂-CH₂-CH₂-O-CO-C(CH₃)=CH₂ | 4 |

**[Table 8]**

| Chemical shift in ¹⁹F-NMR spectrum | | |
|---|---|---|
| Shift (ppm; with respect to F11) | | Integral ratio (F) |
| -93.0 to 88.3 | -O-CF₂-CF₂-O- | 44 |
| -79.9 | -CH₂-CF₂-O- | 2 |
| -77.9 | -CH₂-CF₂-O- | 2 |
| -57.0 to -51.1 | -O-CF₂-O- | 16 |

**[Table 9]**

| Chemical shift in ²⁹Si-NMR spectrum | | |
|---|---|---|
| Shift (ppm; with respect to TMS) | | Integral ratio (Si) |
| -23.9 to -20.9 | -O-Si(CH₃)₂-O- | 72 |
| | -O-Si(CH₃)(C₃H₆OCOC(CH₃)=CH₂)-O- | |
| | -O-Si(CH₃)(C₃H₆O(C₂H₄O)₉CH₃)-O- | |
| 7.4 | CH₃(CH₂)₃-Si(CH₃)₂-O- | 2 |
| 7.5 | -O-Si(CH₃)₂-CH₂CH₂CH₂-O-CH₂-Rf- | 2. |

The above results showed that the product was a block copolymer having a structure represented by the following formula (1-3) and having an organopolysiloxane block content per molecule of 84%. In addition, the polystyrene-equivalent number average molecular weight of the block copolymer as measured by GPC was 10,130.

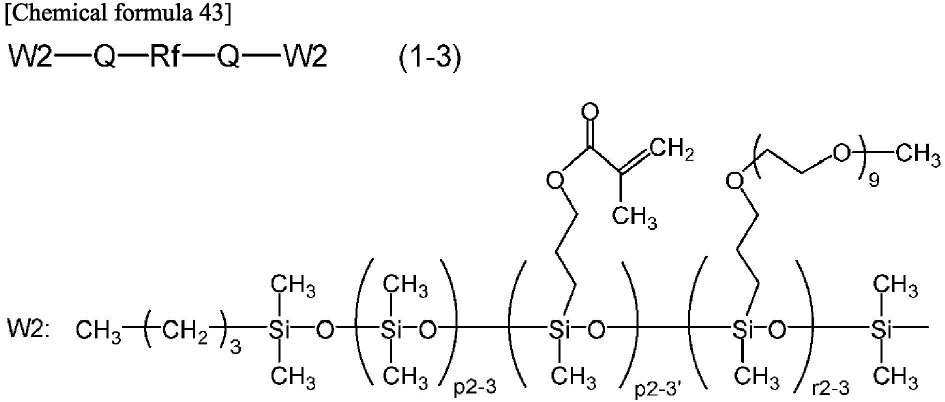

(In the formula (1-3), the number of dimethylsiloxane units is 60, the number of siloxane units having a methacryloyl group is 4, the number of siloxane units having a polyether group is 8, and p2-3, p2-3', and r2-3 in the formula W2 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

### [Working Example 4] Synthesis of Block Copolymer (1-4)

Into a reaction container were placed 3.0 g of an organohydrogenpolysiloxane having a perfluoropolyether block and represented by the formula (27-1), 0.60 g of a polyether having a carbon-carbon double bond at an end thereof and represented by the formula (28-3), and 3.6 g of toluene as a solvent, followed by stirring at 80°C for 5 minutes. Then, 0.01 g of a solution of a platinum-vinylsiloxane complex in toluene was added, followed by stirring at 80°C for 4 hours. Then, 0.26 g of isopropenylbenzene and 0.01 g of a solution of a platinum-vinylsiloxane complex in toluene were added, followed by stirring at 100°C for 6 hours. Excess isopropenylbenzene and the solvent, namely, toluene, were distilled off under reduced pressure to obtain 3.6 g of a liquid product.

The results of NMR spectrum measurements for the resulting product were as follows.

**[Table 10]**

| Chemical shift in ¹H-NMR spectrum (measurement device: AVANCE 400 manufactured by Bruker, solvent: CDCl₃) | | |
|---|---|---|
| Shift (ppm; with respect to TMS) | | Integral ratio (H) |
| -0.55 to 0.30 | -Si-CH₃ | 408 |
| 0.38 to 0.63 | -Si-CH₂-(CH₂)₂-CH₃ | 16 |
| | -Si-CH₂-CH₂-CH₂-O-CH₂-Rf- | |
| | -Si-CH₂-CH₂-CH₂-O-(C₂H₄-O-)₉CH₃ | |
| 0.80 to 1.03 | -Si-CH₂-(CH₂)₂-CH₃ | 14 |
| | -Si-CH₂-CH(CH₃)-C₆H₅ | |
| 1.17 to 1.40 | -Si-CH₂-(CH₂)₂-CH₃ | 20 |
| | -Si-CH₂-CH(CH₃)-C₆H₅ | |
| 1.47 to 1.80 | -Si-CH₂-CH₂-CH₂-O-CH₂-Rf- | 12 |
| | -Si-CH₂-CH₂-CH₂-O-(C₂H₄-O-)₉CH₃ | |
| 2.95 | -Si-CH₂-CH(CH₃)-C₆H₅ | 4 |
| 3.36 | -Si-CH₂-CH₂-CH₂-O-(C₂H₄-O-)₉CH₃ | 12 |
| 3.37 to 3.84 | -Si-CH₂-CH₂-CH₂-O-CH₂-Rf- | 160 |
| | -Si-CH₂-CH₂-CH₂-O-(C₂H₄-O-)₉CH₃ | |
| 7.07 to 7.33 | -Si-CH₂-CH(CH₃)-C₆H₅ | 20 |

**[Table 11]**

| Chemical shift in ¹⁹F-NMR spectrum | | |
|---|---|---|
| Shift (ppm; with respect to F11) | | Integral ratio (F) |
| -93.0 to 88.3 | -O-CF₂-CF₂-O- | 44 |
| -79.9 | -CH₂-CF₂-O- | 2 |
| -77.9 | -CH₂-CF₂-O- | 2 |
| -57.0 to -51.1 | -O-CF₂-O- | 16 |

**[Table 12]**

| Chemical shift in ²⁹Si-NMR spectrum | | |
|---|---|---|
| Shift (ppm; with respect to TMS) | | Integral ratio (Si) |
| -23.9 to -20.9 | -O-Si(CH₃)₂-O- | 68 |
| | -O-Si(CH₃)(C₃H₆O(C₂H₄O)₉CH₃)-O- | |
| | -O-Si(CH₃)(CH₂CH(CH₃)C₆H₅)-O- | |
| 7.4 | CH₃(CH₂)₃-Si(CH₃)₂-O- | 2 |
| 7.5 | -O-Si(CH₃)₂-CH₂CH₂CH₂-O-CH₂-Rf- | 2 |

The above results showed that the product was a block copolymer having a structure represented by the following formula (1-4) and having an organopolysiloxane block content per molecule of 80%. In addition, the polystyrene-equivalent number average molecular weight of the block copolymer as measured by GPC was 8,440. 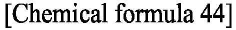 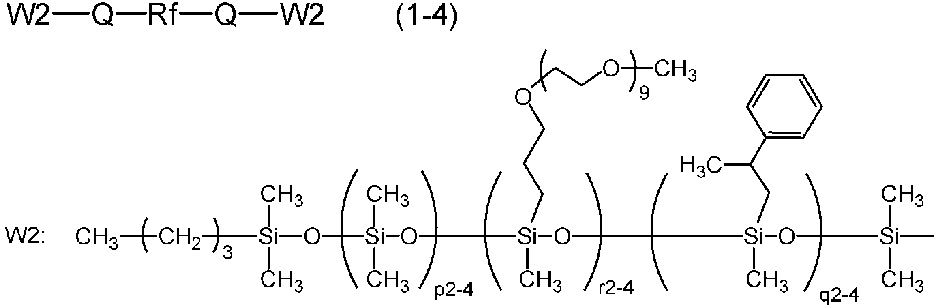 (In the formula (1-4), the number of dimethylsiloxane units is 60, the number of siloxane units having a polyether group is 4, the number of siloxane units having an aralkyl group is 4, and p2-4, r2-4, and q2-4 in the formula W2 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

### [Comparative Example 1 (Organopolysiloxane Block Content per Molecule: 71%)]

A perfluoropolyether-organopolysiloxane block copolymer represented by the following formula (30-1) was synthesized in accordance with JP-B-4900854. The polystyrene-equivalent number average molecular weight of the block copolymer as measured by GPC was 7,110. 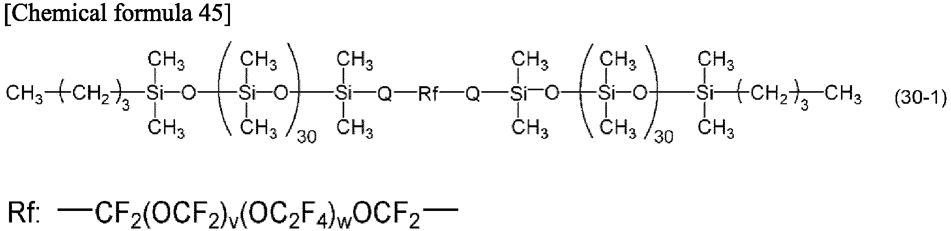 (In the formula, v/w is 0.73, and v + w is 19.)
Q:

-CH₂OCH₂CH₂CH₂-

### [Comparative Example 2 (Organopolysiloxane Block Content per Molecule: 68%)]

Into a reaction container were placed 6.7 g of a perfluoropolyether-organopolysiloxane block copolymer represented by the formula (30-1), 0.86 g of a polysiloxane having a methacryloyl group and represented by the following formula (32-1), and 7.5 g of 1,3-bis(trifluoromethyl)benzene, followed by stirring at 25°C for 5 minutes. Then, 15 mg of trifluoromethanesulfonic acid was added, followed by stirring at 60°C for 7 hours. Then, 100 mg of KYOWAAD 500 (manufactured Kyowa Chemical Industry Co., Ltd.) as an adsorbent was added in order to neutralize trifluoromethanesulfonic acid, followed by stirring at 25°C for 3 hours. The resulting mixture was filtered, and the solvent, namely, 1,3-bis(trifluoromethyl)benzene, was distilled off under reduced pressure to obtain 5.5 g of a perfluoropolyether-organopolysiloxane block copolymer represented by the following formula (30-2). The polystyrene-equivalent number average molecular weight of the block copolymer as measured by GPC was 4,900.

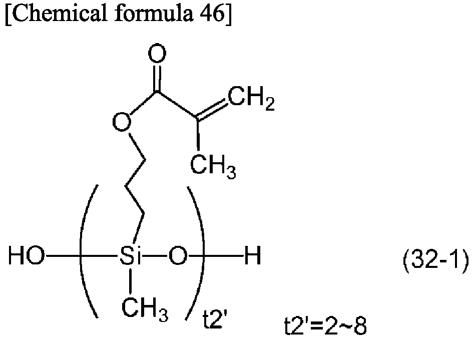

### (In the formula, there is a structural distribution, and t2' is a number of 2 to 8.)

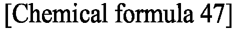

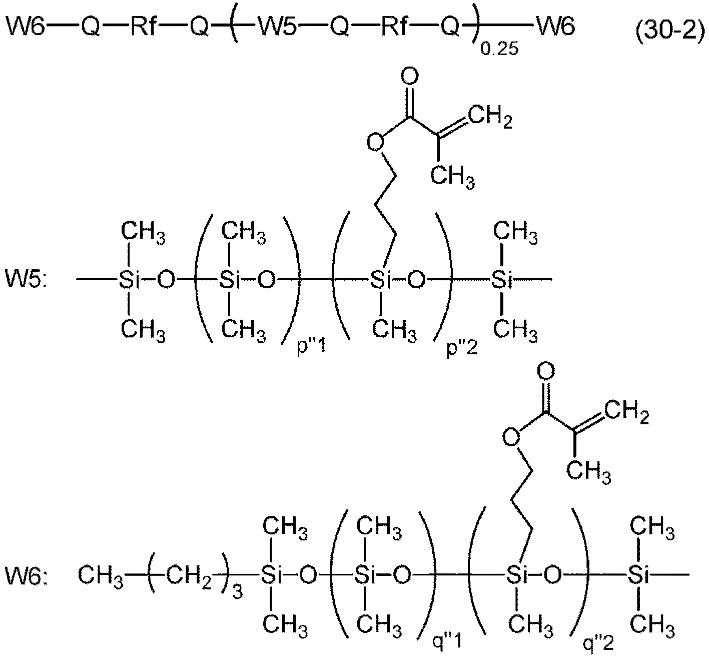

(In the formula (30-2), the number of dimethylsiloxane units is 60, the number of siloxane units having a methacryloyl group is 5, and p"1, p"2, q"1, and q"2 in the formulas W5 and W6 are numbers satisfying these.)
Rf:

-CF₂(OCF₂)ᵥ(OC₂F₄)_{w}OCF₂-

(In the formula, v/w is 0.73, and v + w is 19.)
Q:

-CH₂OCH₂CH₂CH₂-

### [Evaluation of Solubility in Non-fluorinated Organic Compounds]

For each of the Working Examples and Comparative Examples, 1 g of the block copolymer was mixed with 9 g of each of the following non-fluorinated organic compounds, and the liquid mixture was visually observed and evaluated for solubility according to the following criteria.

Evaluation Criteria:
○: The liquid mixture was transparent.
△: The liquid mixture had white turbidity.
× : The liquid mixture was separated in two phases.

**[Table 13]**

| | Working Example 1 | Working Example 2 | Working Example 3 | Working Example 4 | Comparative Example 1 | Comparative Example 2 |
|---|---|---|---|---|---|---|
| Toluene | ○ | ○ | ○ | ○ | ○ | ○ |
| Acetone | ○ | ○ | ○ | ○ | ○ | ○ |
| Ethyl acetate | ○ | ○ | ○ | ○ | ○ | ○ |
| Tetrahydrofuran | ○ | ○ | ○ | ○ | ○ | ○ |
| Isopropyl alcohol | ○ | ○ | ○ | ○ | ○ | ○ |
| Propylene glycol monomethyl ether acetate | ○ | ○ | ○ | ○ | Δ | Δ |
| Methyl methacrylate | ○ | ○ | ○ | ○ | ○ | ○ |
| 2-Hydroxyethyl acrylate | Δ | ○ | ○ | ○ | × | × |

The results in Table 13 showed that the perfluoropolyether-organopolysiloxane block copolymers of the present invention, which had one or more groups selected from an aralkyl group and a group having an oxyalkylene unit as a side chain of an organopolysiloxane block, had better solubility in non-fluorinated organic compounds than the block copolymers of the Comparative Examples, which did not have an aralkyl group or a group having an oxyalkylene unit as a side chain of an organopolysiloxane block. The block copolymers of the present invention are useful as materials for addition to, for example, resin compositions.

## Claims

1. A perfluoropolyether-organopolysiloxane block copolymer comprising a perfluoropolyether block and an organopolysiloxane block, the organopolysiloxane block having, as a side chain thereof, one or more groups selected from an aralkyl group and a group having an oxyalkylene unit, the perfluoropolyether-organopolysiloxane block copolymer being represented by the following formula (1): 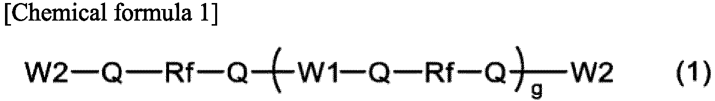
wherein, in the formula (1), Rf is a perfluoropolyether block represented by a formula (2) as defined below, W1 is a divalent organopolysiloxane block represented by a formula (A) as defined below, each W2 is independently a monovalent organopolysiloxane block represented by a formula (B) as defined below, Q is a divalent organic group having 2 to 12 carbon atoms and g is a number of 0 or more, and
wherein Q in the formula (1) is bonded to a carbon atom at an end of Rf, a silicon atom at an end of W1, or a silicon atom at an end of W2,
wherein the formula (2) is expressed as:
[Chemical formula 2]
-C_{z}F_{2z}(OCF₂)ᵥ(OC₂F₄)_{w}(OC₃F₆)ₓ(OC₄F₈)_{y}OC_{z}F_{2z}- (2)
wherein, in the formula (2), z is a number of 1 to 4, v, w, x, and y are each independently a number of 0 to 200, v + w + x + y = 3 to 200, individual repeating units may be linear or branched, and a sequence of the individual repeating units is not limited and may be random or in blocks,
wherein the formula (A) is expressed as: 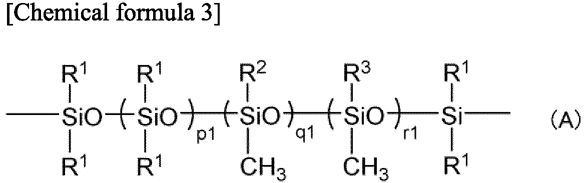
wherein, in the formula (A), each R¹ is independently a group selected from an alkyl group having 1 to 18 carbon atoms, a phenyl group, and an organic group having a (meth)acryloyl group and having 4 to 12 carbon atoms, R² is an aralkyl group having 7 to 18 carbon atoms, R³ is a group having an oxyalkylene unit and having 6 to 300 carbon atoms, the group being represented by the following formula (3): 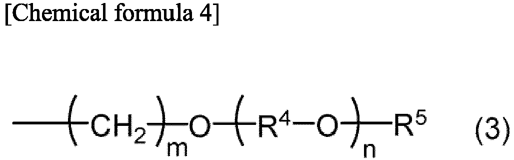 wherein, in the formula (3), R⁴ is an alkylene group having 2 to 4 carbon atoms, R⁵ is an alkyl group having 1 to 4 carbon atoms, m is a number of 3 to 4, n is a number of 1 to 60, the oxyalkylene unit in parentheses with n comprises one or more types of oxyalkylene units, and when the oxyalkylene unit comprises two or more types of oxyalkylene units, a sequence of the individual units is not limited and may be random or in blocks, and
p1, q1, and r1 are each a number of 0 to 1,000, and a sequence of individual repeating units is not limited and may be random or in blocks and,
the formula (B) is expressed as: 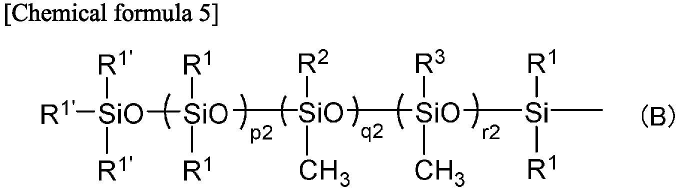 wherein, in the formula (B), each R¹ is independently a group selected from an alkyl group having 1 to 18 carbon atoms, a phenyl group, and an organic group having a (meth)acryloyl group and having 4 to 12 carbon atoms, R² is an aralkyl group having 7 to 18 carbon atoms, R³ is a group containing an oxyalkylene group and having 6 to 300 carbon atoms, the group being represented by the formula (3), each R¹' is independently a group selected from an alkyl group having 1 to 18 carbon atoms, a phenyl group, and an organic group having a (meth)acryloyl group and having 4 to 12 carbon atoms, p2, q2, and r2 are each a number of 0 to 1,000, and a sequence of individual repeating units is not limited and may be random or in blocks,
with the proviso that q1 and r1 in the formula (A) and q2 and r2 in the formula (B) are not simultaneously 0.

2. The perfluoropolyether-organopolysiloxane block copolymer according to claim 1, wherein the perfluoropolyether-organopolysiloxane block copolymer has a number average molecular weight of 3,000 to 500,000 and an organopolysiloxane block content per molecule of 50% or more.

3. The perfluoropolyether-organopolysiloxane block copolymer according to claim 1 or 2, wherein, in the formulas (A) and (B), q1 + q2 > 1, and r1 + r2 = 0.

4. The perfluoropolyether-organopolysiloxane block copolymer according to claim 1 or 2, wherein, in the formulas (A) and (B), q1 + q2 = 0, and r1 + r2 > 1.

5. The perfluoropolyether-organopolysiloxane block copolymer according to any one of claims 1 to 4, wherein one or more of R¹ and R¹' in the formula (A) or (B) are organic groups having a (meth)acryloyl group and having 4 to 12 carbon atoms.

6. The perfluoropolyether-organopolysiloxane block copolymer according to any one of claims 1 to 5, wherein the perfluoropolyether block represented by Rf is a group represented by the following formula (4):
[Chemical formula 6]
-CF₂(OCF₂)ᵥ(OC₂F₄)_{w}OCF₂- (4)
wherein, in the formula (4), v and w are each a number of 0 to 200, with the provisos that v + w = 3 to 200, the (OC₂F₄) repeating unit may be linear or branched; and a sequence of individual repeating units is not limited and may be random or in blocks.
